# EUROPÄISCHE PATENTSCHRIFT

(11) **EP 1 969 801 B1**
(45) Veröffentlichungstag und Bekanntmachung des Hinweises auf die Patenterteilung: **18.04.2018**
(21) Anmeldenummer: 06791897.9
(22) Anmeldetag: 07.09.2006
(51) Int. Cl.: H04L 29/08

(54) **VERFAHREN UND VORRICHTUNG ZUM KONFIGURIEREN NEUER UND MODIFIZIERTER DIENSTE IN EINER VERMITTLUNGSEINHEIT EINES IP MULTIMEDIA SUBSYSTEMS**
METHOD AND DEVICE FOR THE CONFIGURATION OF NEW AND MODIFIED SERVICES IN A SWITCHING UNIT OF AN IP MULTIMEDIA SUBSYSTEM
PROCÉDÉ ET DISPOSITIF DE CONFIGURATION DE SERVICES NOUVEAUX ET MODIFIÉS DANS UNE UNITÉ DE COMMUTATION D'UN SOUS-SYSTÈME IP MULTIMÉDIA

(30) Priorität: 29.12.2005 DE 102005063048
(43) Veröffentlichungstag der Anmeldung: 17.09.2008
(73) Patentinhaber: Nokia Solutions and Networks GmbH & Co. KG, 81541 Munich (DE)
(72) Erfinder: STÜTTGEN, Martin, 81373 München (DE)
(74) Vertreter: Weidel, Gottfried
(86) Internationale Anmeldenummer: PCT/EP2006/008719
(87) Internationale Veröffentlichungsnummer: WO 2007/079791

(56) Entgegenhaltungen:
- US-A1- 2005 083 904
- US-A1- 2005 108 347
- "Digital cellular telecommunications system (Phase 2+); Universal Mobile Telecommunications System (UMTS); IP Multimedia (IM) session handling; IM call model; Stage 2 (3GPP TS 23.218 version 6.3.0 Release 6); ETSI TS 123 218" ETSI STANDARDS, EUROPEAN TELECOMMUNICATIONS STANDARDS INSTITUTE, SOPHIA-ANTIPO, FR, Bd. 3-CN1, Nr. V630, März 2005 (2005-03), Seiten 1-59, XP014027527 ISSN: 0000-0001
- "Digital cellular telecommunications system (Phase 2+); Universal Mobile Telecommunications System (UMTS); IP Multimedia (IM) Subsystem Cx and Dx Interfaces; Signalling flows and message contents (3GPP TS 29.228 version 6.8.0 Release 6); ETSI TS 129 228" ETSI STANDARDS, EUROPEAN TELECOMMUNICATIONS STANDARDS INSTITUTE, SOPHIA-ANTIPO, FR, Bd. 3-CN4, Nr. V680, September 2005 (2005-09), Seiten 1-57, XP014031985 ISSN: 0000-0001
- "Digital cellular telecommunications system (Phase 2+); Universal Mobile Telecommunications System (UMTS); Cx and Dx interfaces based on the Diameter protocol; Protocol details (3GPP TS 29.229 version 6.6.0 Release 6); ETSI TS 129 229" ETSI STANDARDS, EUROPEAN TELECOMMUNICATIONS STANDARDS INSTITUTE, SOPHIA-ANTIPO, FR, Bd. 3-CN4, Nr. V660, September 2005 (2005-09), Seite 1, XP014032730 ISSN: 0000-0001 in der Anmeldung erwähnt

## Beschreibung

Die Erfindung bezieht sich auf eine Vermittlungseinheit für ein IP Multimedia Subsystem, insbesondere ein derartiges nach 3GPP spezifiziertes Subsystem sowie auf ein Verfahren zum Betreiben einer derartigen Vermittlungseinheit.

Das "3rd Generation Partnership Project (3GPP) ist ein Zusammenarbeitsübereinkommen, das im Dezember 1998 etabliert worden ist. Dieses Zusammenarbeitsübereinkommen bringt eine Vielzahl von Körperschaften für Telekommunikationsstandards zusammen, die als "Organizational Partners" bezeichnet werden. Aktuelle Partner in diesem Sinne sind ARIB, CCSA, ETSI, ATIS, TTA und TTC. Die Absicht für die Gründung von 3GPP war es, global anwendbare technische Spezifikationen und technische Reports für ein Mobilfunknetz der dritten Generation anzugeben, das auf einem weiterentwickelten GSM Core Netzwerk oder ansonsten weiterentwickelter Radio Access Technologie beruht, wie z.B. General Packet Radio Service (GPRS) und Enhanced Data rates for GSM Evolution (EDGE). Gleichzeitig sollen im Rahmen eines "Universal Terrestrial Radio Access (UTRA) sowohl die Technologien im Frequency Division Duplex (FDD) Verfahren als im Time Division Duplex (TDD) unterstützt werden.

Das von der 3GPP spezifizierte IMS (IP Multimedia Subsystem), vgl. auch 3GPP TS 23.002 "Network Architecture"; www.3gpp.org, beinhaltet einen HSS (Home Subscriber Service), welcher Nutzer-spezifische Daten in einem User Profil verwaltet. In diesem User Profil existieren auch Servicespezifische Anteile, die zum Beispiel festlegen, welche Applikationsdienste (z.B. Push To Talk, Presence Service) dem Nutzer bereitgestellt werden. Wenn nun von einem Netzwerkbetreiber neue Applikationsdienste angeboten oder auch bestehende Dienste modifiziert werden, die für alle im Netzwerk des Betreiber lokalisierte Nutzer zugänglich gemacht werden sollen, kann für den Netzwerkbetreiber ein vergleichsweise hoher administrativer Aufwand entstehen, um diese neue und/oder modifizierten Dienste in allen User Profilen zu konfigurieren.

In der 3GPP UMTS Referenzarchitektur Ausgabe 5 wird jeder Dienst für den Nutzer in seinem User Profil bekannt gemacht. Somit muss jedes User Profil geändert werden, um den Nutzern den neu eingeführten Dienst bereitzustellen. In der Ausgabe 6 (Release 6) sind erstmals User Profile geschaffen, die sich mehrere User teilen können (sogenannte "shared iFC" gemäss 3GPP TS 29.229 V6.2, Kap. 7.1.1. und Kap. B2). Nachteilig ist es jedoch hierbei, dass dieser definierte Ansatz aber zu einem Fehlverhalten im IMS führen kann, weil parallel zur Konfiguration der shared-iFC's auch in der logischen Vermittlungseinheit (Serving Call Session Control Function = S-CSCF) diese entsprechend konfigurierten shared-iFC's durch eine Konfiguration des S-CSCF Systems ebenfalls bekannt gemacht werden müssen, um einerseits eine Optimierung der Datenhaltung zu erhalten und andererseits das System auch soweit transparent zu halten, dass die S-CSCF auch tatsächlich weiss, wann sie im persönlichen User Profil und wann sie in einem gemeinsamen User Profil nachsehen muss. Es obliegt daher dem Netzbetreiber für eine konsistente Konfiguration im HSS und in der S-CSCF zu sorgen. Daher hat der Netzwerkbetreiber darauf zu achten, dass die Priorität der Nutzer-spezifischen Dienste und der globalen Dienste (shared iFC's) im HSS eindeutig konfiguriert sind. Mit der Zahl zunehmender und unterschiedlicher Benutzerprofile nimmt daher auch leider die Gefahr zu, dass die Konfiguration unübersichtlich und damit fehlerbehaftet sein kann. US2005108347 A1 befasst sich mit der Bereitstellung von abonnierten Diensten, u.a. mit Präsenz-Diensten, unter Verwendung des Session Initiation Protocols SIP.

Der vorliegenden Erfindung liegt daher die Aufgabe zugrunde, eine zufriedenstellende Lösung für dieses Problem anzugeben. Dabei soll es systemseitig wie verfahrensseitig einfach sein, neue und/oder modifizierte Dienste einfach und konsistent zu konfigurieren.

Diese Aufgabe wird durch die beiliegenden unabhängigen Ansprüche 1 und 4 gelöst. Auf diese Weise besteht eine direkte Konfigurationsmöglichkeit in der Vermittlungseinheit S-CSCF, die es dem Netzwerkbetreiber erlaubt, effizient neue benutzerunabhängige Dienste bereitzustellen. Die Betreiberserviceliste(n) dient(en) dabei als Konfigurationstabelle(n), die in ihrer Struktur alle Daten bereitstellt(en), die zum Aufruf von Applikationsdiensten über die ISC Schnittstelle (IMS Service Control) erforderlich sind. Eine Konfiguration der Dienste in dem individuellen HSS (Home Subscriber Service) ist daher nicht, u.a. für diese Art von globalen Diensten, erforderlich, wodurch der Netzwerkbetreiber erheblich entlastet wird. Zugleich kann auch das Problem der Inkonsistenz infolge einer ungleichen Konfiguration der Dienste im HSS und in der S-CSCF eliminiert werden.

Um gewisse Dienste mit unterschiedlicher Priorisierung und/oder hierarchischer Einbindung ausgestalten zu können, können eine erste Betreiberserviceliste und die zweite Betreiberserviceliste vorgesehen sein, deren Abarbeitung für unterschiedliche triggerbezogene Hierarchiestufen vorgesehen ist. Ein bevorzugte Ausführungsform der Erfindung kann es diesbezüglich beispielsweise vorsehen, dass erst alle in der ersten Betreiberserviceliste definierten Services, dann die für den Nutzer in einer Home Subscriber Liste ausgeführten Services und zum Schluss alle in der zweiten Betreiberserviceliste definierten Services ausführbar sind. Auf diese Weise bleibt es auch für Netzwerkbetreiber transparent, in welcher Reihenfolge Dienste aufgerufen werden.

Die Betreiberservicelisten werden mittels OAM-Funktionalitäten (Organisation, Administration and Management) in der S-CSCF konfiguriert und sind jederzeit erweiter- oder modifizierbar ohne die S-CSCF in ihrer Funktion zu beeinträchtigen. Damit jedoch Inkonsistenzen im System bei laufenden Transaktionen durch Konfigurationsänderungen sicher ausgeschlossen werden können, ist es vorteilhaft, wenn im Falle einer Aktualisierung der ersten und/oder der zweiten Betreiberserviceliste alle bereits aufgebauten SIP Transaktionen weiter mit dem alten Konfigurationsstand der ersten und/oder der zweiten Betreiberserviceliste ausführbar sind.

Eine geeignete Struktur für die Betreiberserviceliste kann es vorsehen, dass in der Betreiberserviceliste für jeden Service eine Applikationsadresse, eine Filterregel und eine Prioritätszuordnung umfasst sind. Somit können die Dienste über die ISC Schnittstelle eindeutig aufgerufen werden.

Weitere vorteilhafte Ausgestaltungen der Erfindung können den übrigen Unteransprüche entnommen werden.

Ausführungsbeispiele der Erfindung werden anhand einer Zeichnung näher erläutert. Dabei zeigen:
- Figur 1: den prinzipiellen Aufbau eines gemäss 3GPP spezifizierten IMS Subsystems;
- Figur 2: die prinzipielle Aufteilung von Media- und Signalisierungsdaten in dem Subsystem nach Figur 2; und
- Figur 3: eine schematische Darstellung für den Prozessablauf bei der Einführung eines neuen Dienstes.

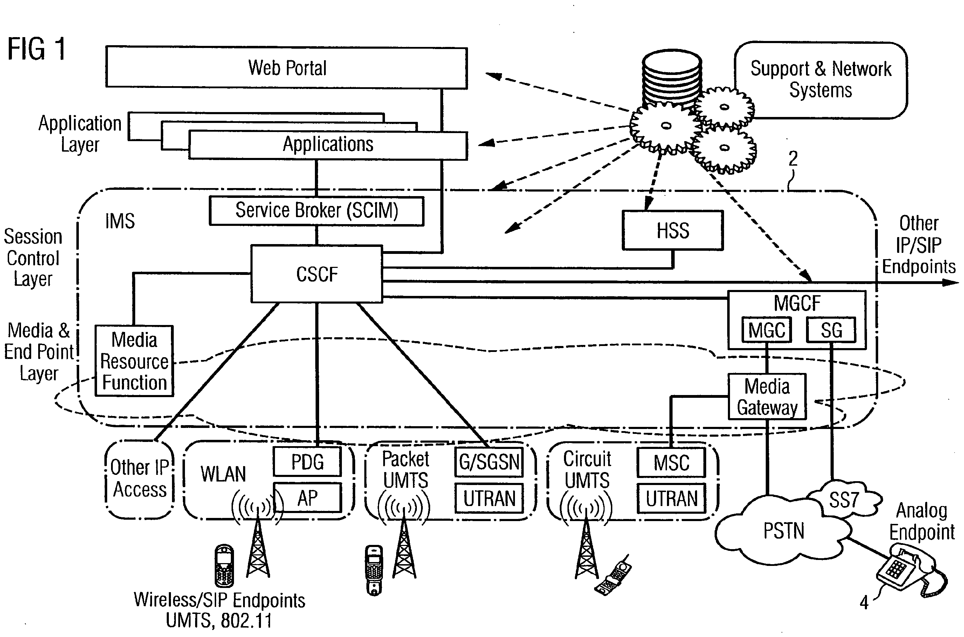

Figur 1 zeigt den prinzipiellen logischen Aufbau eines gemäss 3GPP spezifizierten IMS Subsystems 2. Das IMS Subsystems 2 ist dabei eigentlich eine Ansammlung von logischen Funktionen, die als drei funktionale Schichten betrachtet werden können:
a) die Medien- und Endpunkt-Schicht (media and endpoint layer);
b) eine Call- oder Session Control-Schicht (call or session control layer); und
c) eine Anwendungsschicht (application layer).

Dabei wird in der Medien- und Endpunkt-Schicht die SIP-Signalisierung gestartet oder beendet, beispielsweise um Sitzungen (sessions) zwischen einem oder mehreren Nutzern zu errichten oder um Überbringerdienste (bearer services) zu liefern, wie z.B. die Umwandlung von Sprache mit einem analogen oder digitalen Format in IP Pakete. In dieser Schicht sind ausserdem die Media Gateways umfasst, die die VoIP-Datenströme in zeitschlitzorientierte Formate umwandeln, die für ein öffentliches Telekommunikationsnetz (PSTN = public switch telecommunication network) benötigt werden.

Der Media-Server in dieser Schicht ermöglicht einen weiten Bereich von Medien-bezogenen Diensten, wie zum Beispiel das conferencing, play announcements, collecting in-band signaling tones, speech recognition und speech synthesis.

Mit Bezug auf die Rationalisierungsprinzipien, die hinter der IMS Architektur stehen, werden die Ressourcen des Media-Servers unter allen Anwendungen aufgeteilt. So kann beispielsweise jede Anwendung, die das Abspielen von Bekanntmachungen (annoucements) benötigt, diesen gemeinsamen Media-Server benutzen. Solche Anwendungen umfassen beispielsweise straightforward voicemail, advanced 800 messaging services und interactive VXML speech recognition und synthesis. Die Media-Server dieser Schicht können auch Nicht-Telefonie-Funktionen unterstützen, wie zum Beispiel das Replizieren von Media für Push-to-Talk-Dienste.

Die Call und/oder Session Control Schicht umfasst die wesentlichen Elemente der IMS Architektur, also im besonderen die SIP proxy call session control function (CSCF). Dieses zentrale Merkmal der IMS Architektur ermöglicht die Registrierung von Endgeräten oder Endpunkten im Netzwerk und das Routen von SIP Signalisierungsmeldungen an den geeigneten Anwendungsserver. Die CSCF wechselwirkt ausserdem mit der Netzwerkzugangs- und -transportschicht um eine bestimmte Qualität der Dienste für alle Dienste bereithalten zu können.

Die Call und/oder Session Control Schicht umfasst weiter das ebenfalls für diese Architektur zentrale Element der Datenbank des Home Subcriber Servers (HSS), in welchem das jedem Benutzer eigene Diensteprofil abgelegt ist. Dieses Diensteprofil des Endnutzers speichert alle Dienste-Informationen dieses Endnutzers und seine vorrangigen Dienste an einer zentralen Stelle. Dies umfasst auch die laufende Registrierungsinformation eines Endnutzers, wie beispielsweise seine IP-Adresse, Roaming Informationen und Telefoniedienste (z.B. Anrufweiterleitungsinformationen).

Durch diese Zentralisierung der Nutzerinformationen können die Anwendungen diese Nutzerinformationen gemeinsam verwenden, um vereinheitlichte Personendatenverzeichnisse, multi-client type presence information und zusammengesetzte Dienste zu erzeugen. Diese zentrale Datenhaltung vereinfacht ausserdem grundsätzlich die Verwaltung der Nutzerdaten und sichert im allgemeinen eine konsistente Ansicht der aktiven Teilnehmer über alle Dienste gesehen mit den eingangs genannten Einschränkungen.

Diese Schicht umfasst ausserdem auch die eigentliche Media gateway control function (MGCF). Diese Funktionalität ermöglicht es der SIP Signalisierung mit den verschiedenen Typen der Signalisierung zu arbeiten, die von den Media gateways benutzt werden, also beispielsweise im allgemeinen das Session Management Protokoll H.248 - auch Megaco genannt. Die MGCF managt die Verteilung der Sitzungen über eine Vielzahl von Media Gateways, während eine Media Resource Funktion (MRF) eine vergleichbare Funktion für die Media Server erbringt.

Die Anwendungsschicht umfasst schliesslich die eigentlichen Anwendungsserver, die die Logik zum Betreiben der Endnutzerdienste liefert. Die IMS Architektur zusammen mit der SIP Signalisierung sind dabei hinreichend flexibel um einen weiten Bereich von Telefonie- und Nicht-Telefonie-Diensten unterstützen zu können.

Ein Telefonie-Anwendungsserver (TAS) liefert hierfür die grundlegenden Anrufverarbeitungsdienste, wie zum Beispiel Digit Analyse, Routing, Anrufherstellung, Anrufverzögerung, Anrufweiterleitung und Conferencing. Der TAS beherbergt die Logik, die es den Media Servern erlaubt, die geeigneten Töne und Bekanntmachungen zur Behandlung des Anrufs bereitzustellen. Weiter analysiert der TAS die gewählte Nummer, wenn der Anruf von einem öffentlichen Telekommunikationsnetzwerk kommt, um für die Media Gateway Control Funktionalität das Routen des Anruf an das gewünschte Ziel zu ermöglichen. Diese Steuerungsfunktion instruiert dann das betroffene Media Gateway, den erhaltenen zeitschlitzorientierten Sprachdatenstrom eines PSTN's in einen Datenstrom mit IP Echtzeit Transport Protokoll umzuwandeln. Dieser Datenstrom wird dann an die IP Adresse eines IP-fähigen Telefons geleitet. Weiter liefert der TAS die sogenannten Filterfunktionen, die im IMS als Intelligent Network Call Trigger Points bekannt sind. Hiermit ist gemeint, dass der TAS die Weiterbearbeitung des Anrufs aussetzt und in dem entsprechenden Nutzerprofil nachsieht, ob bestimmte Dienste zu diesem Zeitpunkt auf den Anruf anzuwenden sind, wenn der Anruf an einen derartigen Triggerpunkt kommt. Unter Verwendung dieses Nutzerprofils bestimmt der TAS dann die in Frage kommenden Dienste und formatiert eine SIP Signalisierungsmeldung entsprechend um die Steuerung des Anrufs an den entsprechenden Anwendungsserver zu übergeben.

Ein einziges IMS kann dabei eine Vielzahl von TAS umfassen, die jedes für sich spezifische Merkmale für bestimmte Typen von Geräten oder Endpunkten liefern. Ein Server für mehrere Applikationen kann dabei unter Verwendung der SIP Signalisierung zur Handhabung von Anrufen zwischen unterschiedlichen Klassen von Geräten ertüchtigt sein.

Weiter beinhaltet der TAS eine IP Multimedia-Service Switching Funktion (IM-SSF), die im wesentlichen eine Übersetzungsfunktion ist. Die IM-SSF ermöglicht es SIP-Meldungen mit Meldungen von anderen Signalisierungsprotokollen, wie z.B. CAMEL and ANSI-41, zusammen zu wirken. Dieses Zusammenwirken erlaubt IP-fähigen durch IMS unterstützten Geräten den Zugang zu einer grossen Bandbreite von Telefonie-Diensten, wie Calling Name Services, 800 services, local number portability (LNP) services und One Number Services.

In der Anwendungsschicht können darüber hinaus weitere ergänzende Anwendungsserver für Telefoniedienste eingebunden sein. So können separate vom übrigen Netzwerk unabhängige Server vorgesehen sein, die durch Trigger Points aktivierbar sind und so ergänzende Telefoniedienste erbringen können, sei es am Anfang, am Ende oder während eines Anrufs. Derartige Dienste sind beispielsweise Click-to-Dial, Click-to-Transfer, Click-to-Conference, Voicemail Services, Interactive Voice Response Services, VoIP virtual private network services, Pre-Paid Billing Services und Inbound/Outbound Call Blocking Services.

Ein davon verschiedener Typ von Elementen in der Applikationsschicht ist ein auf SIP basierender Anwendungsserver, der ausserhalb der Telefonie/Anrufer-Umgebung anzuordnen ist. Dieser Anwendungsserver kann mit Software auf den Geräten zusammenwirken, um Dienste wie Instant Messaging, Push-to-Talk Over Cellular (PoC) und Presence-Enabled Services zu bieten. Durch die Implementierung dieser SIP-basierten Dienste in der gemeinsamen IMS Architektur wird das Zusammenwirken von Telefonie- und Nicht-Telefonie-Diensten ermöglicht, wodurch eine Vielzahl von der Diensten bereitgestellt werden können, die sowohl einen Telefonie- als auch einen Nicht-Telefonie-Anteil aufweisen. Ein Beispiel für einen derartigen Dienst ist eine konvergierende Click-to-Contact Buddy List, die die Präsenz des Nutzers und seine Verfügbarkeitsinformationen anzeigt und eine Point-and-Click-Schnittstelle über eine Vielzahl von Kommunikationsdiensten (Telefonie, Instant Messaging und PoC) liefert.

Ein weiteres wesentliches Element der Anwendungsschicht ist das Open Service Access Gateway (OSA-GW), das es den Netzbetreibern erlaubt, ihren Kunden die Entwicklung und Implementierung von Diensten anzubieten, damit deren VoIP Netzwerkresourcen wirksam eingesetzt werden können. So kann beispielsweise ein Unternehmen den Wunsch haben, einige Back-Office-Vorgänge für direkte Sprache zugänglich zu machen, so dass beispielsweise ein Anruf automatisch initiiert wird, wenn ein Auftrag ausgeliefert wird. Dieser Vorgang kann dann beispielsweise durch eine Ortsinformation eines drahtlosen PDA's, den die ausliefernde Person bei sich führt, getriggert werden.

Häufig ist es auch so, dass Anwendungsentwickler in Unternehmen zwar einen starken IT Background haben, aber überhaupt nicht mit der Vielzahl von komplexen Signalisierungsprotokollen, wie SS7, ANSI-41, SIP und ISDN vertraut sind. Zur Umgehung dieses Problems bietet die Anwendungsschicht des IMS einfach zu programmierende Schnittstellen (API) für Anwendungen, um den Übertritt in die Telefoniewelt zu ermöglichen. Dieses Zusammenwirken von SIP und API wird so in dem OSA-GW ermöglicht.

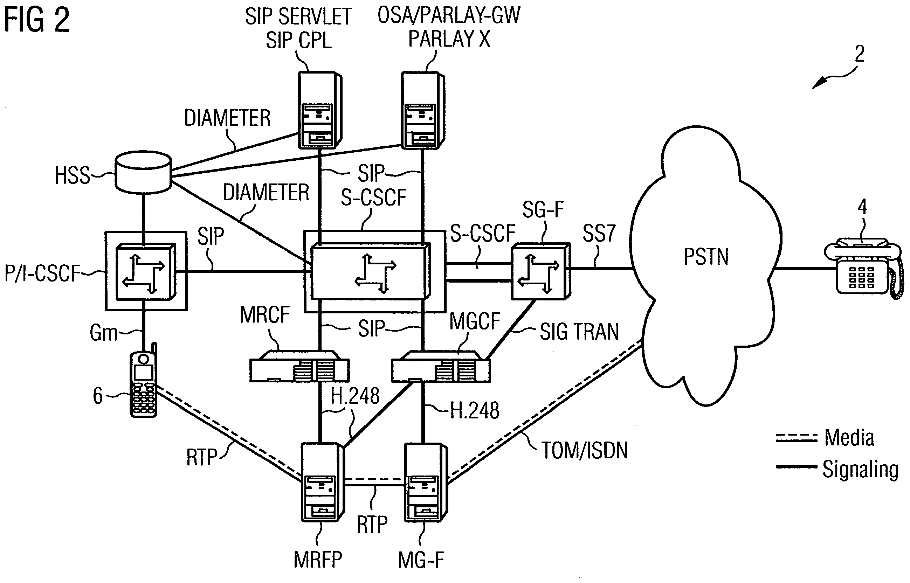

Figur 2 zeigt nun in prinzipieller Darstellung die Aufteilung des Nutzdatenstroms (Media oder auch Payload genannt) und des Signalisierungsdatenstroms in dem IMS 2 gemäss Figur 1. Der Nutzdatenstrom (strichpunktierte Linien) wird dabei über ISDN an eine Media Gateway Funktionalität MG-F geleitet und dort in einen paketorientierten Datenstrom umgewandelt und weiter im Real-Time Transport Protokoll RTP über einen Media Resource Function Processor MRFP an ein mobiles Endgerät 6 geleitet. Die eigentliche Signalisierung dieser Payload-Lieferung erfolgt über SIP und H.248 Meldungen, die von einer Serving Call Session Control Function S-CSCF gemanagt werden. Die S-CSCF ist dabei eine Art virtuelle Vermittlungszentrale, die darüber hinaus den IMS so auszeichnenden Signalisierungsverkehr mit einem Home Subscriber Server HSS und einem SIP SERVLET und einem OSA/PARLAY-Gateway pflegt. Zugleich steuert die S-CSCF eine Media Gateway Control Funktionalität MGCF und eine Media Resource Control Funktionalität MRCF.

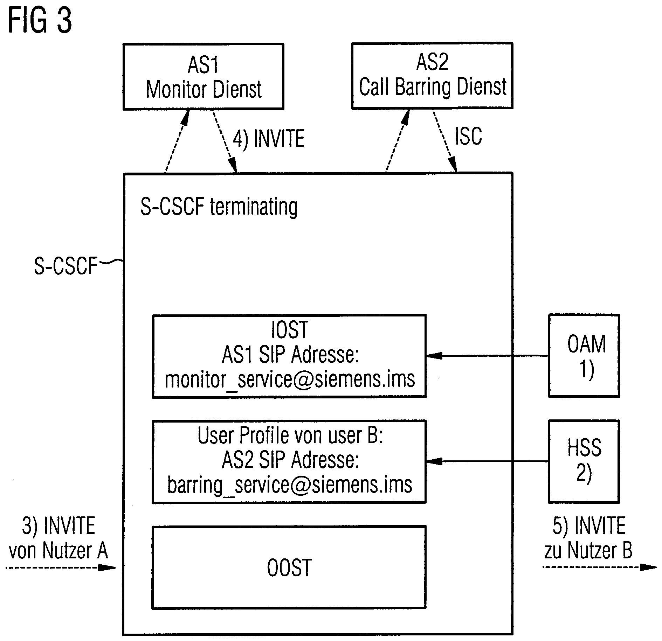

Figur 3 zeigt nun den Verfahrensablauf bei der Einführung eines neuen Dienstes, für den in der S-CSCF gemäss der vorliegenden Erfindung zwei Betreiberservicelisten IOST und OOST konfiguriert werden können. Der Betreiber führt beispielsweise einen neuen Monitor-Dienst ein, der es dem Nutzer erlaubt, eine Statistik über alle eingehenden Chat Sessions zu bekommen. Hierzu wird der Monitor-Dienst auf einem neuen Anwendungsserver AS1 implementiert, der über eine ISC Schnittstelle (IMS Service Control Interface) in Betrieb genommen werden kann. Für einen Nutzer B wurde bereits ein Call Barring Dienst auf einem weiteren Anwendungsserver AS2 eingerichtet.

Im Schritt 1) wird der neue Monitor-Dienst mittels einem dem OAM zuzurechnenden Elementmanager (vgl. beispielsweise OSA/PARLAY-GW in Figur 2; Service Broker (SCIM) in Figur 1) in der IOST in der S-CSCF konfiguriert und ist dort ab sofort für alle Nutzer, die dieser S-CSCF zugeordnet sind, einsatzbereit. Die OOST hat in diesem Ausführungsbeispiel keinen Eintrag; sie könnte aber Einträge für Dienste aufweisen, die nach den Einträgen im IOST und dem HSS abgearbeitet werden. Die IOST hat als Eintrag dabei im wesentlichen die SIP Adresse des Anwendungsservers AS1.

Im Schritt 2) registriert sich der Nutzer B im IMS, wodurch sein Nutzerdaten aus dem HSS in seiner zugeordneten S-CSCF verfügbar sind.

Im Schritt 3) schickt nun der Nutzer A eine INVITE-Nachricht an Nutzer B, um eine Chat Session aufzubauen. Eine in der S-CSCF auf der Terminating-Seite implementierte Service-Logik analysiert die ankommende SIP Nachricht und findet in der IOST den zuvor konfigurierten Eintrag. Dabei ist der als Trigger Point ausgestaltete Filter so gesetzt, dass alle INVITE-Nachrichten zum Anwendungsserver AS1 geleitet werden.

Im Schritt 4) wird zuerst der Anwendungsserver AS1 über das ISC Interface kontaktiert. Der AS1 arbeitet als Proxy und schickt die SIP Nachricht wieder an die S-CSCF zurück. Aufgrund der aus dem HSS für den Nutzer B übernommenen Einträge leitet die S-CSCF die INVITE-Nachricht an den auf dem weiteren Anwendungsserver AS2 ausgeführten Call Barring Dienst weiter, weil der Filter in dem Nutzerprofil des Nutzer B auf derartige INVITE-Nachrichten zutrifft. Der weitere Anwendungsserver AS2 findet Nutzer A nicht auf der Call Barring Liste und sendet die Nachricht daher zur Weiterleitung zurück an die S-CSCF.

Im Schritt 5) analysiert die Service-Logik in der S-CSCF Terminating-seitig die ankommende SIP Nachricht und findet weder in den aus dem HSS stammenden Nutzerprofilen noch in der OOST weitere Einträge für Dienste. Somit kann die INVITE-Nachricht nun zum Nutzer B geleitet werden.

Auf diese Weise ist für die Konfiguration des neuen Dienstes (Monitor-Dienst auf dem Anwendungsserver AS1) keine Interaktion mit dem HSS erforderlich, was für den Betreiber eine erhebliche Vereinfachung in sich birgt. Inkonsistenzen durch falsche Konfiguration in der S-CSCF und dem HSS entfallen. Da der neue Dienst für alle Nutzer bereitgestellt wurde, war so nur in jeder S-CSCF ein Eintrag in der IOST (oder natürlich auch in der OOST) erforderlich. Da dieser Eintrag auch einen Filter enthält, der hierarchisch sehr mächtige Filterregeln zulässt, ist es sogar ergänzend möglich, neue Dienste nur einer bestimmten Nutzergruppe zugänglich zu machen. Zudem wird in der S-CSCF in erheblichem Masse Speicherplatz eingespart, wenn dort eben nicht für jeden Nutzer, der allgemein verfügbare Dienste verwendet, die gleichen Einträge aus den Nutzerprofilen geladen werden müssen, sondern eben nur der in der IOST oder der OOST konfigurierte Eintrag zu lesen ist.

Das vorliegende Beispiel ist daher nur ein mögliches Beispiel für derartige Dienste. Andere Dienste sind in der Beschreibung zur Figur 1 unter den in der Anwendungsschicht laufenden Telefonie- und Nicht-Telefonie-Dienste hinreichend genannt und können in analoger Weise implementiert werden.

## Patentansprüche

1. Vermittlungseinheit (S-CSCF), anordenbar in einem IP Multimedia Subsystem (IMS), umfassend
mindestens eine Betreiberserviceliste (IOST, OOST),
wobei die Vermittlungseinheit (S-CSCF) derart angepasst ist, dass ein neuer Service und/oder eine Änderungen in einem bestehenden Service über eine Administrationseinheit (OSA/PARLAY-GW) in der mindestens einen Betreiberserviceliste (IOST, OOST) konfiguriert wird, auf einen sich in der Vermittlungseinheit (S-CSCF) registrierenden Nutzer (A, B) die in der mindestens einen Betreiberserviceliste (IOST, OOST) für diesen Nutzer (A, B) konfigurierten Services angewendet werden, eine erste Betreiberserviceliste (IOST) und eine zweite Betreiberserviceliste (OOST) vorgesehen sind, deren Abarbeitung für unterschiedliche triggerbezogene Hierarchiestufen vorgesehen ist, und
erst alle in der ersten Betreiberserviceliste (IOST) definierten Services, dann die für den Nutzer (A, B) in einem Home Subscriber Server (HSS) aufgeführten Services und zum Schluss alle in der zweiten Betreiberserviceliste (OOST) definierten Services aufgerufen werden.

2. Vermittlungseinheit nach Anspruch 1, **dadurch gekennzeichnet, dass** im Falle einer Aktualisierung der ersten und/oder der zweiten Betreiberserviceliste (IOST, OOST) alle bereits aufgebauten SIP Transaktionen weiter mit dem alten Konfigurationsstand der ersten und/oder der zweiten Betreiberserviceliste (IOST, OOST) ausführbar sind.

3. Vermittlungseinheit nach Anspruch 1 oder Anspruch 2, **dadurch gekennzeichnet, dass** in der Betreiberserviceliste (IOST, OOST) für jeden Service eine Applikationsadresse, eine Filterregel und eine Prioritatszuordnung umfasst sind.

4. Verfahren zum Betreiben einer Vermittlungseinheit (S-CSCF) in einem IP Multimedia Subsystem (IMS), bei dem:
a) für die Vermittlungseinheit (S-CSCF) mindestens eine Betreiberserviceliste (IOST) definiert wird,
b) ein neuer Service und/oder eine Änderungen in einem bestehenden Service über eine Administrationseinheit (OSA/PARLAY-GW) in der mindestens einem Betreiberserviceliste (IOST) konfiguriert wird; und
c) auf einen sich in der Vermittlungseinheit (S-CSCF) registrierenden Nutzer (A, B) die in der mindestens einen Benutzerserviceliste (IOST, OOST) für diesen Nutzer (A, B) konfigurierten Services angewendet werden,
wobei eine erste Betreiberserviceliste (IOST) und die zweite Betreiberserviceliste (OOST) definiert werden, deren Abarbeitung für unterschiedliche triggerbezogene Hierarchiestufen vorgesehen ist, und
wobei erst alle in der ersten Betreiberserviceliste (IOST) definierten Services, dann die für den Nutzer (A, B) in einem Home Subscriber Server aufgeführten Services und zum Schluss alle in der zweiten Betreiberserviceliste (OOST) definierten Services aufgerufen werden.

5. Verfahren nach Anspruch 4, **dadurch gekennzeichnet, dass** im Falle einer Aktualisierung der ersten und/oder der zweiten Betreiberserviceliste (IOST, OOST) alle bereits aufgebauten SIP Transaktionen weiter mit dem alten Konfigurationsstand der ersten und/oder der zweiten Betreiberserviceliste (IOST, OOST) ausgeführt werden.

6. Verfahren Anspruch 4 oder Anspruch 5, **dadurch gekennzeichnet, dass** in der Betreiberserviceliste (IOST, OOST) für jeden Service eine Applikationsadresse, eine Filterregel und eine Prioritätszuordnung eingetragen werden.

## Claims

1. Switching unit (S-CSCF), arrangeable in an IP multimedia subsystem (IMS), comprising at least one operator service list (IOST, OOST), the switching unit (S-CSCF) being adapted such that a new service and/or a modification in an existing service is configured in the at least one operator service list (IOST, OOST) by means of an administration unit (OSA/PARLAY-GW), the services configured in the at least one operator service list (IOST, OOST) for a user (A, B) registering in the switching unit (S-CSCF) are applied to said user (A, B), a first operator service list (IOST) and a second operator service list (OOST) are provided, the processing of which is intended for different trigger-related levels of hierarchy, and first all services defined in the first operator service list (IOST), then the services listed for the user (A, B) in a home subscriber server (HSS) and, finally, all services defined in the second operator service list (OOST) are called up.

2. Switching unit according to Claim 1, **characterized in that** in the case of an update of the first and/or the second operator service list (IOST, OOST), all SIP transactions already set up can still be executed with the old configuration level of the first and/or the second operator service list (IOST, OOST).

3. Switching unit according to Claim 1 or Claim 2, **characterized in that** the operator service list (IOST, OOST) comprises for each service an application address, a filtering rule and a priority allocation.

4. Method for operating a switching unit (S-CSCF) in an IP multimedia subsystem (IMS), in which:
a) at least one operator service list (IOST) is defined for the switching unit (S-CSCF),
b) a new service and/or a modification in an existing service is configured in the at least one operator service list (IOST) by means of an administration unit (OSA/PARLAY-GW); and
c) the services configured in the at least one user service list (IOST, OOST) for a user (A, B) registering in the switching unit (S-CSCF) are applied to said user (A, B),
wherein a first operator service list (IOST) and the second operator service list (OOST) are defined, the processing of which is intended for different trigger-related levels of hierarchy, and wherein first all services defined in the first operator service list (IOST), then the services listed for the user (A, B) in a home subscriber server and, finally, all services defined in the second operator service list (OOST) are called up.

5. Method according to Claim 4, **characterized in that** in the case of an update of the first and/or the second operator service list (IOST, OOST), all SIP transactions already set up are still executed with the old configuration level of the first and/or the second operator service list (IOST, OOST).

6. Method according to Claim 4 or Claim 5, **characterized in that** an application address, a filtering rule and a priority allocation are entered for each service in the operator service list (IOST, OOST).

## Revendications

1. Unité de commutation (S-CSCF) pouvant être agencée dans un sous-système IP multimédia (IMS), comprenant :
au moins une liste de services de gestionnaire (IOST, OOST),
l'unité de commutation (S-CSCF) étant adaptée de telle sorte que :
un nouveau service et/ou une modification dans un service existant étant configurés via une unité d'administration (OSA/PARLAY-GW) dans l'au moins une liste de services de gestionnaire (IOST, OOST),
à un utilisateur (A, B) qui s'enregistre dans l'unité de commutation (S-CSCF) étant appliqués les services configurés dans l'au moins une liste de services de gestionnaire (IOST, OOST) pour cet utilisateur (A, B), une première liste de services de gestionnaire (IOST) et une deuxième liste de services de gestionnaire (OOST) étant prévues, dont le traitement est prévu pour différents niveaux hiérarchiques en rapport avec le déclenchement, et d'abord tous les services définis dans la première liste de services de gestionnaire (IOST), puis les services mentionnés pour l'utilisateur (A, B) dans un Home Subscriber Server (HSS) et, finalement, tous les services définis dans la deuxième liste de services de gestionnaire (OOST) étant appelés.

2. Unité de commutation selon la revendication 1, **caractérisée en ce que**, en cas de mise à jour de la première et/ou de la deuxième liste de services de gestionnaire (IOST, OOST), toutes les transactions SIP déjà établies peuvent continuer d'être exécutées avec l'ancien état de configuration de la première et/ou de la deuxième liste de services de gestionnaire (IOST, OOST).

3. Unité de commutation selon la revendication 1 ou la revendication 2, **caractérisée en ce qu'**une adresse d'application, une règle de filtrage et une affectation de priorité sont comprises dans la liste de services de gestionnaire (IOST, OOST) pour chaque service.

4. Procédé d'exploitation d'une unité de commutation (S-CSCF) dans un sous-système IP multimédia (IMS), dans lequel :
a) pour l'unité de commutation (S-CSCF) est définie au moins une liste de services de gestionnaire (IOST) ;
b) un nouveau service et/ou une modification dans un service existant sont configurés via une unité d'administration (OSA/PARLAY-GW) dans l'au moins une liste de services de gestionnaire (IOST) et
c) à un utilisateur (A, B) qui s'enregistre dans l'unité de commutation (S-CSCF) étant appliqués les services configurés dans l'au moins une liste de services de gestionnaire (IOST, OOST) pour cet utilisateur (A, B), une première liste de services de gestionnaire (IOST) et une deuxième liste de services de gestionnaire (OOST) étant définies, dont le traitement est prévu pour différents niveaux hiérarchiques en rapport avec le déclenchement, et d'abord tous les services définis dans la première liste de services de gestionnaire (IOST), puis les services mentionnés pour l'utilisateur (A, B) dans un Home Subscriber Server et, finalement, tous les services définis dans la deuxième liste de services de gestionnaire (OOST) étant appelés.

5. Procédé selon la revendication 4, **caractérisé en ce que**, en cas de mise à jour de la première et/ou de la deuxième liste de services de gestionnaire (IOST, OOST), toutes les transactions SIP déjà établies continuent d'être exécutées avec l'ancien état de configuration de la première et/ou de la deuxième liste de services de gestionnaire (IOST, OOST).

6. Procédé selon la revendication 4 ou la revendication 5, **caractérisé en ce qu'**une adresse d'application, une règle de filtrage et une affectation de priorité sont enregistrées dans la liste de services de gestionnaire (IOST, OOST) pour chaque service.
